# EUROPÄISCHE PATENTANMELDUNG

(11) **EP 2 463 189 A1**
(43) Veröffentlichungstag der Anmeldung: **13.06.2012**
(21) Anmeldenummer: 11187604.1
(22) Anmeldetag: 03.11.2011
(51) Int. Cl.: B62M 11/14, B62M 6/70, B62M 6/50, B62M 6/60

(54) **Elektromotorische Antriebseinrichtung, insbesondere für ein Zweirad**

(30) Priorität: 07.12.2010 DE 102010062534
(71) Anmelder: Robert Bosch GmbH, 70442 Stuttgart (DE)
(72) Erfinder: Decker, Gerhard, 77855 Achern (DE)

(57) **Zusammenfassung**

Die Erfindung betrifft eine Antriebseinrichtung (5), insbesondere für ein pedalbetriebenes Fahrzeug, umfassend:
- eine Pedalantriebsvorrichtung (6) mit einer Pedalwelle (12), die eine erste Kopplungseinheit (61) zur Kopplung mit einem Antriebsrad (3) trägt, die koaxial zur Pedalwelle (12) angeordnet ist;
- eine elektromotorische Antriebsvorrichtung (71) mit einer rotatorischen elektrischen Maschine (16), deren Läufer (21) koaxial um die Pedalwelle (12) und drehbeweglich bezüglich der Pedalwelle (12) angeordnet ist, wobei der Läufer (21) der elektrischen Maschine (16) mit einer zweiten, von der ersten Kopplungseinheit (61) getrennten Kopplungseinheit (72) zur Kopplung mit dem Antriebsrad (3) gekoppelt ist, um ein von der elektrischen Maschine (16) bereitgestelltes Antriebsmoment über die zweite Kopplungseinheit (72) zu übertragen.

## Beschreibung

### Technisches Gebiet

Die Erfindung betrifft eine elektromotorische Antriebseinrichtung, insbesondere zum Antreiben eines pedalbetriebenen Fahrzeugs, wie z.B. einem Zweirad.

### Stand der Technik

Für den Antrieb von Zweirädern, insbesondere von Fahrrädern oder so genannten Pedelecs (Fahrräder mit elektrischem Hilfsmotor), sind bislang elektromotorische Antriebe bekannt, die mit einer von der Pedalkette unabhängigen Antriebskette ein Hinterrad des Zweirades antreiben. Derartige elektromotorische Antriebe sind beispielsweise auf einem Gepäckträger des Zweirades montiert, so dass die Antriebskette seitlich an dem Hinterrad vorbei verläuft. Alternativ können derartige elektromotorische Antriebe auch an der Vordergabel montiert sein und das Vorderrad antreiben.

Bei Zweirädern ist es mittlerweile üblich, die Hinterräder federnd mit dem Rahmen des Zweirades zu verbinden, so dass eine das entsprechende Hinterrad tragende Hinterradgabel federnd schwenkbeweglich an dem Rahmen des Zweirades befestigt ist. Die Schwenkachse ist in horizontaler Richtung zur Drehachse des Hinterrads versetzt nahe einer Pedalwelle angeordnet, die die Pedaleinheit trägt, über die ein Fahrer des Zweirades das Zweirad durch eigene Kraft antreiben kann. Die Nähe der Schwenkachse der Hinterradgabel zur Pedalwelle gewährleistet in Verbindung mit dem herkömmlichen für die Gangschaltung verwendeten Kettenspanner einen sicheren Sitz der Pedalkette auf den Zahnrädern. Eine solche Anordnung ist nicht geeignet, einen elektrischen Antrieb vorzusehen, der auf dem Gepäckträger oberhalb des Hinterrades angebracht ist, da die Auslenkung des Hinterrades in vertikaler Richtung eine Realisierung einer solchen Anordnung erschwert.

Bei einem Antrieb des Vorderrades mit einem elektromotorischen Antrieb kann es je nach Fahrsituation, insbesondere bei Änderungen des Antriebsmomentes während einer Kurvenfahrt zu gefährlichen Situationen kommen, in denen der Fahrer des Zweirades dieses nicht mehr beherrschen kann und somit eine erhöhte Unfallgefahr besteht.

Weiterhin sind koaxiale Antriebe bekannt, die über mehrstufige Planetengetriebe direkt bzw. mit einem Freilauf auf dem herkömmlichen Kettenantrieb wirken. In diesen Fällen muss jedoch ein Freilauf an der Pedalwelle vorgesehen werden, was in der Regel aufwändig zu realisieren ist und den Einsatz bisheriger Pedalwellen nicht zulässt.

Herkömmliche Antriebseinrichtungen für pedalbetriebene Fahrzeuge sehen zudem eine Kommutierung der elektrischen Maschine basierend auf einem motorinternen Lagesensor vor. Ein solcher Lagesensor ist aufwändig zu implementieren und insbesondere die zusätzliche Verdrahtung mit einem Motorsteuergerät birgt Risiken für die Zuverlässigkeit des Antriebssystems.

Weiterhin ist üblicherweise vorgesehen, die Fahrunterstützung durch den Motor nur dann zu aktivieren, wenn ein Drehmoment durch den Fahrer auf das Pedal ausgeübt wird. Dazu ist in der Regel ein aufwändiger Pedaldrehmomentsensor vorgesehen, der ebenfalls die Zuverlässigkeit des Gesamtsystems reduziert.

Es ist Aufgabe der vorliegenden Erfindung, eine elektromotorische Antriebseinrichtung für ein pedalbetriebenes Fahrzeug, insbesondere einem Zweirad, zur Verfügung zu stellen, der mit einer gefederten schwenkbeweglichen Lagerung des Hinterrades verwendet werden kann und der mit herkömmlichen Pedaleinheiten verwendet werden kann. Es ist weiterhin Aufgabe der Erfindung die Anzahl der verwendeten Sensoren in der Antriebseinrichtung zu reduzieren.

### Offenbarung der Erfindung

Diese Aufgabe wird durch die elektromotorische Antriebseinrichtung für ein Fahrzeug gemäß Anspruch 1 sowie durch das pedalbetriebene Fahrzeug gemäß dem nebengeordneten Anspruch gelöst.

Weitere vorteilhafte Ausgestaltungen sind in den abhängigen Ansprüchen angegeben.

Gemäß einem ersten Aspekt ist eine Antriebseinrichtung, insbesondere für ein pedalbetriebenes Fahrzeug, vorgesehen. Die Antriebseinrichtung umfasst:
- eine Pedalvorrichtung mit einer Pedalwelle, die eine erste Kopplungseinheit zur Kopplung mit einem Antriebsrad trägt, das koaxial zur Pedalwelle angeordnet ist;
- eine elektromotorische Antriebsvorrichtung mit einer rotatorischen elektrischen Maschine, deren Läufer koaxial um die Pedalwelle und drehbeweglich bezüglich der Pedalwelle angeordnet ist, wobei der Läufer der elektrischen Maschine mit einer zweiten, von der ersten Kopplungseinheit getrennten Kopplungseinheit zur Kopplung mit dem Antriebsrad gekoppelt ist, um ein von der elektrischen Maschine bereitgestelltes Antriebsmoment über die zweite Kopplungseinheit zu übertragen.

Eine Idee der obigen Antriebseinrichtung besteht darin, die elektromotorische Antriebseinrichtung mit der Pedalvorrichtung, die die Pedalwelle und die erste Kopplungseinheit umfasst, so zu kombinieren, dass die elektromotorische Antriebsvorrichtung in besonders einfacher Weise z.B. über einen Kettenantrieb mit einem Antriebsrad verbunden werden kann. Durch das Vorsehen der zweiten Kopplungseinheit nahe der Pedalwelle oder sogar koaxial zur Pedalwelle, ist es somit möglich, das Antriebsrad federnd schwenkbeweglich um eine Schwenkachse nahe der Antriebseinrichtung zu lagern, ohne zusätzliche Maßnahmen zur Kopplung der Antriebseinrichtung mit der entsprechenden Antriebsradnabe vorzusehen, da die Schwenkachse der Antriebskette und die Schwenkachse der Pedalkette (Hinterradgabel) im Wesentlichem identisch sind oder nahe beieinander liegen.

Durch die obige elektromotorische Antriebseinrichtung kann für die Pedalvorrichtung eine handelsübliche Pedalkurbel und eine handelsübliche Kettenschaltung eingesetzt werden. Die elektromotorische Antriebseinrichtung und der Wellendurchgang für die Pedalwelle können mechanisch einfach und problemlos aufgebaut werden und lassen die sowohl motorische als auch generatorische Fahrunterstützung zu. Zudem hat die Trennung der Pedalvorrichtung von der elektromotorischen Antriebsvorrichtung den Vorteil, dass das Antriebsrad auf der Seite der Pedalvorrichtung mit Hilfe eines handelsüblichen Ritzelsatzes mit einem Freilauf für die Kettenschaltung angetrieben werden kann und auf der Seite der elektromotorischen Antriebseinrichtung mit Hilfe eines Kettenritzels für die elektromotorische Antriebseinrichtung betrieben werden kann. Damit bleiben die gewünschten Übersetzungsverhältnisse der Kettenschaltung auf der Pedalantriebsseite für den Fahrer erhalten und auf der Seite der elektromotorischen Antriebsvorrichtung können die Übersetzungsverhältnisse günstiger auf den elektromotorischen Antrieb abgestimmt werden.

Weiterhin können die erste und/oder die zweite Kopplungseinheit als Abtriebsritzel ausgebildet sein. Insbesondere kann das erste Abtriebsritzel koaxial zur Pedalwelle ausgebildet sein.

Gemäß einer weiteren Ausführungsform kann das zweite Abtriebsritzel koaxial zur Pedalwelle ausgebildet sein, wobei insbesondere das zweite Abtriebsritzel axial mit einem Sonnenrad eines Planetengetriebes verbunden ist.

Es kann vorgesehen sein, dass die elektrische Maschine mit der zweiten Kopplungseinheit über ein Planetengetriebe gekoppelt ist, wobei das zweite Abtriebsritzel Teil einer Abtriebseinheit ist, die das zweite Abtriebsritzel über ein Kopplungsritzel mit einem Sonnenrad des Planetengetriebes koppelt.

Gemäß einer weiteren Ausführungsform kann die Abtriebseinheit bewegbar ausgebildet sein, um eine Kopplung zwischen dem Sonnenrad und dem Kopplungsritzel herzustellen oder zu lösen.

Weiterhin kann eine Motorsteuereinheit vorgesehen sein, um eine Läuferlage eines Läufers der elektrischen Maschine mit Hilfe eines sensorlosen Erfassungsverfahren durch Messen mindestens einer elektrischen Größe, insbesondere einer Phasenspannung und/oder eines Phasenstromes, zu detektieren und um eine Kommutierung der elektrischen Maschine basierend auf der detektierten Läuferlage durchzuführen.

Weiterhin kann ein Sensor vorgesehen sein, um eine Bewegung der Pedalwelle zu detektieren, wobei eine Motorsteuereinheit vorgesehen ist, um abhängig von einer detektierten Bewegung der Pedalwelle die elektrische Maschine anzusteuern.

Gemäß einer Ausführungsform kann ein Sensor vorgesehen sein, um eine Bewegung der Pedalwelle zu detektieren, wobei eine Motorsteuereinheit vorgesehen ist, wobei die Motorsteuereinheit die elektrische Maschine generatorisch betriebt, wenn keine Bewegung der Pedalwelle detektiert wird.

Die erste und die zweite Kopplungseinheit können an in axialer Richtung gegenüberliegenden Seiten der elektrischen Maschine angeordnet sein.

Gemäß einem weiteren Aspekt ist ein pedalbetriebenes Fahrzeug, insbesondere ein Zweirad, vorgesehen. Das Fahrzeug umfasst:
- einen Rahmen;
- ein Antriebsrad, das an dem Rahmen angeordnet ist;
- die obige Antriebseinrichtung, die an dem Rahmen angeordnet ist und über Kraftübertragungseinrichtungen mit dem Hinterrad zum Übertragen einer Antriebskraft verbunden ist.

Weiterhin kann die erste Kopplungseinheit mit dem Antriebsrad über eine erste Kette und die zweite Kopplungseinheit mit dem Antriebsrad über eine zweite Kette zum Übertragen der Antriebskraft verbunden sein, wobei die erste und die zweite Kette auf in axialer Richtung gegenüberliegenden Seiten der Antriebseinrichtung angeordnet sind.

Das Antriebsrad kann an einer Hinterradgabel aufgehangen sein, wobei die Radgabel nahe der Antriebseinrichtung schwenkbeweglich gelagert ist, so dass bei einem Verschwenken des Antriebsrads eine Änderung des Abstands der zweiten Kopplungseinrichtung und einer Radnabe des Antriebsrads eine relative Änderung von 10%, vorzugsweise von 5%, nicht übersteigt.

### Kurzbeschreibung der Zeichnungen

Bevorzugte Ausführungsformen werden nachfolgend anhand der beigefügten Zeichnungen näher erläutert. Es zeigen:
- Figur 1: eine Seitenansicht auf ein Zweirad mit einem elektromotorischen Antrieb;
- Figur 2: eine Schnittdarstellung durch den elektromotorischen Antrieb quer zur Achsrichtung gemäß einer ersten Ausführungsform; und
- Figur 3: eine Schnittdarstellung eines elektromotorischen Antriebs für ein Zweirad quer zur Achsrichtung gemäß einer weiteren Ausführungsform.

### Beschreibung von Ausführungsformen

Nachfolgend werden elektromotorische Antriebsvorrichtungen gemäß Ausführungsformen der Erfindung beschrieben. Die elektromotorischen Antriebsvorrichtungen sind in einem Antriebszylinder vorgesehen, der ein Tretlager eines Zweirades ersetzen soll.

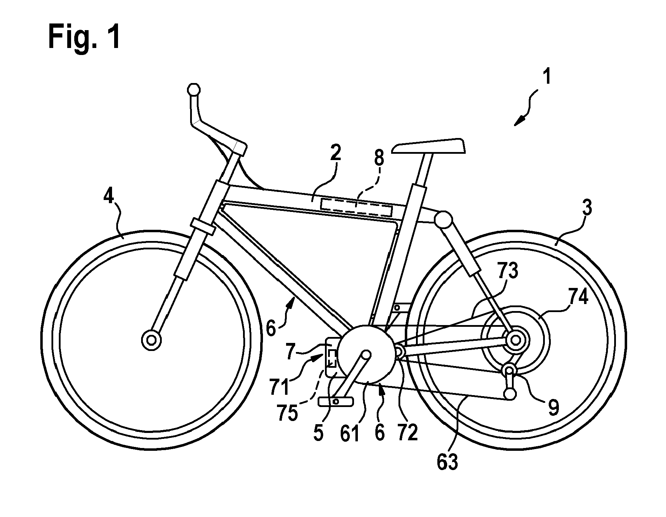

In Figur 1 ist schematisch ein Zweirad 1 als Beispiel für ein pedalbetriebenes Fahrzeug dargestellt, das einen Rahmen 2 aufweist, an dem ein Hinterrad 3 und ein Vorderrad 4 angeordnet sind. Der Rahmen 2 trägt anstelle eines Tretlagers eine Antriebseinrichtung 5, an der sowohl eine Pedalantriebsvorrichtung 6 als auch eine elektromotorische Antriebsvorrichtung 7 vorgesehen sind.

Die Pedalantriebsvorrichtung 6 weist als eine Kraftübertragungseinrichtung ein Abtriebsritzel 61 (erste Kopplungseinheit) auf, das auf einer Seite des Zweirades 1 mit einem entsprechenden Hinterradritzel 62 über eine Pedalkette 63 verbunden ist. Das Hinterradritzel 62 ist über einen (nicht gezeigten) Freilauf mit einer Hinterradnabe des Hinterrades 3 verbunden.

Die elektromotorische Antriebsvorrichtung 7 weist im Bereich der Pedalantriebsvorrichtung 6 eine Antriebseinheit 71 auf, die über ein Abtriebsritzel 72 (zweite Kopplungseinheit) auf einer weiteren Seite des Zweirades 1 ein Drehmoment an das Hinterrad anlegen kann. Das Abtriebsritzel 72 ist dazu über eine Antriebskette 73 mit einem weiteren Hinterradritzel 74 verbunden. Die Antriebseinheit 71 wird über ein Motorsteuergerät 75, das nahe der elektromotorischen Antriebsvorrichtung 71 angeordnet ist, angesteuert. Mit Hilfe einer im Rahmen 2 angeordneten Energiequelle 8, wie z.B. einer Batterie oder einem Akkumulator, wird die elektromotorische Antriebseinheit 71 mit elektrischer Energie versorgt.

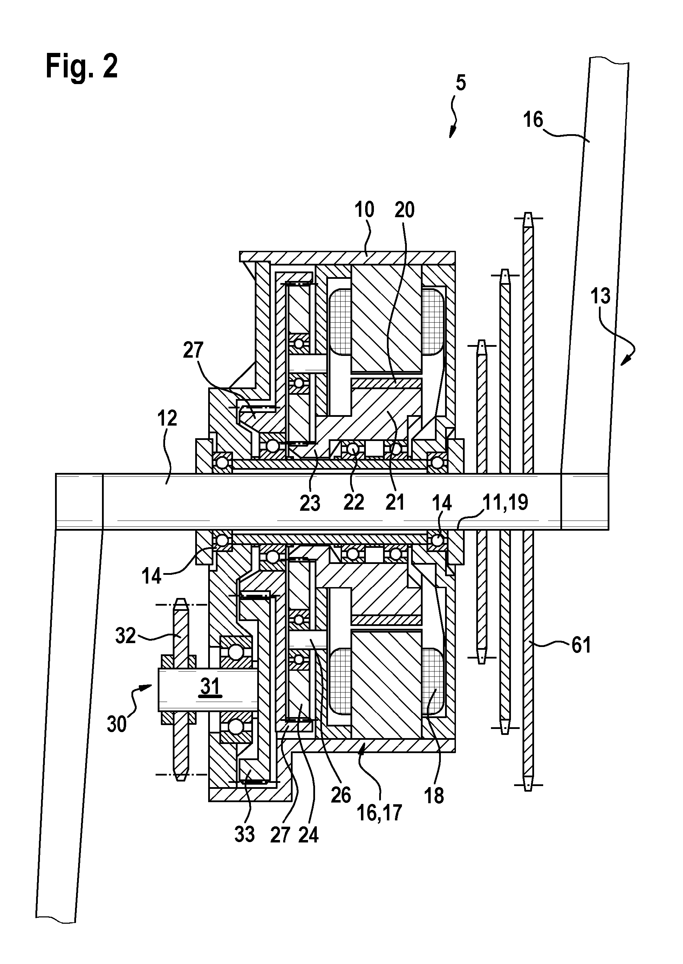

In Figur 2 ist eine Querschnittsansicht durch die Antriebseinrichtung 5 schematisch dargestellt. Die Antriebseinrichtung 5 umfasst ein Gehäuse 10, das robust, vorzugsweise aus einem metallischen Material, ausgebildet ist. Das Gehäuse wird anstelle des Tretlagers eines herkömmlichen Zweirades an dem Rahmen 2 befestigt.

Das Gehäuse 10 weist einen Wellendurchgang 11 auf, in dem eine Pedalwelle 12 der Pedalantriebsvorrichtung 6 gelagert ist. Die Lagerung erfolgt mithilfe von Lagerringen 14, die an den äußeren Enden des Wellendurchgangs 11 aufgesetzt sind und die Pedalwelle 12 im Wesentlichen gelagert halten. Die Lagerringe 14 können als Wälz- oder Kugellager ausgebildet sein.

Die Pedalantriebsvorrichtung 6 umfasst weiterhin Abtriebsritzel 61, die starr mit der Pedalwelle 12 verbunden sind. An den äußeren Enden der Pedalwelle 12 in axialer Richtung sind Pedalarme 16 angeordnet, die die Fußpedale (nicht gezeigt) tragen.

Das Gehäuse 10 ist im Wesentlichen geschlossen aufgebaut und weist eine elektrische Maschine 16 auf, die bspw. in Form einer Synchronmaschine, die insbesondere hochpolig ausgebildet sein kann. Die Synchronmaschine weist eine Statoranordnung 17 auf, die an (nicht gezeigten) Statorzähnen Statorspulen 18 trägt. Die Statoranordnung weist eine im Wesentlichen kreisförmige Innenausnehmung auf, die koaxial zur Pedalwelle 12 in dem Wellendurchgang 11 angeordnet ist.

Die Statorspulen 18 sind über Anschlussleitungen mit dem Motorsteuergerät 75 verbunden. Das Motorsteuergerät 75 ist weiterhin mit der Energiequelle 8 verbunden, um elektrische Energie zu beziehen. Die Anschlussleitungen werden aus dem Gehäuse 10 herausgeführt und z.B. mit einer oder mehreren Gummidichtungen abgedichtet. Die Gummidichtung mit den Motor-Anschlussleitungen wird bei der Montage einfach seitlich, d.h. in axialer Richtung zur Pedalachse, in die entsprechende Gehäuse-Aussparung geschoben, bevor das Gehäuse 10 mit einem Deckel seitlich verschlossen wird.

Der Wellendurchgang 11 wird durch den Lagerabschnitt 19 des Gehäuses 10 gebildet. In der Innenausnehmung des Stators 17 ist ein mit Permanentmagneten 20 versehener Rotor 21 (Läufer) vorgesehen, der mit Hilfe eines koaxial ausgebildeten Trägers 15 auf einer Außenseite des Lagerabschnitts 19 mit Lagerringen 22 gelagert ist, so dass sich der Rotor 21 um den Lagerabschnitt 19 frei bewegen kann. Der Rotor 21 umgibt den Träger 15. Die Lagerringe 22 können als Kugel-oder Wälzlager vorgesehen sein.

Die elektrische Maschine 16 ist koaxial zu der Pedalwelle 12 angeordnet, jedoch von dieser vollständig mechanisch entkoppelt. Der Rotor 21 weist ein Rotorabtriebsritzel 23 auf, das vorzugsweise einstückig mit dem Träger 15 des Rotors 21 ausgebildet ist. Das Rotorabtriebsritzel 23 ist mit Planetenrädern 24 verzahnt. Beispielsweise können drei Planetenräder 24 vorgesehen sein, die im Wesentlichen im Innern des Gehäuses 10 ortsfest und drehbeweglich fixiert sein können. Beispielsweise können die Planetenräder 24 fest mit dem Stator 17 der elektrischen Maschine 16 verbunden sein. Die Halterung der Planetenräder 24 erfolgt über Planetenradwellen 26, an denen die Planetenräder 24 vorzugsweise gelagert angeordnet sind. Die Befestigung der Halterung für die Planetenräder 24 an dem Stator 17 hat den Vorteil, dass die Montage in einfacher Weise durch Einsetzen des Stators 17 in das Gehäuse 10 durchgeführt werden kann.

Auf die Planetenräder 24 ist ein Sonnenrad 27 aufgesetzt, das im Wesentlichen einem Hohlrad mit Innenzahnung entspricht. Jedes der Planetenräder greift in die Innenzahnung des Sonnenrades 27, so dass ein von der elektrischen Maschine bereitgestelltes Moment auf das Sonnenrad übertragen wird. Auch das Sonnenrad 27 ist koaxial zu der Pedalwelle 12 angeordnet. Das Sonnenrad 27 weist weiterhin in axialer Richtung zu dem Hohlrad versetzt ein Sonnenradabtriebsritzel 27 auf, das eine Außenzahnung aufweist.

Es ist eine Abtriebseinheit 30 vorgesehen, die eine Abtriebswelle 31 mit dem Abtriebsritzel 72 aufweist, das über die Abtriebswelle 31 mit einem Kopplungszahnrad 33 gekoppelt ist. Das Kopplungszahnrad 33 wird auf das Sonnenradabtriebsritzel 27 gedrückt, so dass ein Eingriff des Sonnenradabtriebsritzels 27 und des Kopplungszahnrads 33 gewährleistet ist.

Mithilfe eines Bowdenzugs kann der Fahrer die Kopplung des Kopplungszahnrades 33 mit dem Sonnenradabtriebsritzel 27 bzw. deren Abkopplung bewirken. Alternativ kann bei einer Überlast bzw. einer Blockierung des Antriebs der anwachsende Kettenzug der Antriebskette 73, die an dem Abtriebsritzel 72 aufliegt, das im Schiebesitz gelagerte Kopplungszahnrad 33 aus der Getriebeverzahnung mit dem Sonnenradabtriebsritzel 27 lösen und so die Blockierung unterbrechen. Auf diese Weise kann der elektromotorische Antrieb gegen eine Überlast geschützt werden. Das Lösen der Getriebeverzahnung kann durch ein Verschieben der Abtriebseinheit 30 in achsparalleler Richtung oder durch Verschwenken eines Tragearms (nicht gezeigt), an dem die Abtriebseinheit 30 angeordnet ist, erfolgen.

Die dargestellte Antriebseinrichtung 5 ermöglicht es, das Hinterrad eines Zweirades sowohl mit dem Abtriebsritzel 72 der elektromotorischen Antriebsvorrichtung 7 als auch mit dem Abtriebsritzel 61 der Pedalvorrichtung 6 über die Antriebskette 73 bzw. die Pedalkette 63 anzutreiben. Da die Ketten in der Antriebseinrichtung 5 um nahe beieinander liegende Achsen geführt werden, kann das Hinterrad 3 federnd gelagert werden, ohne dass eine aufwendige Kettenspannvorrichtung oder dergleichen für die Antriebskette 73 vorgesehen werden muss. Vorzugsweise erfolgt die federnde Lagerung des Hinterrades um eine Schwenkachse, die nahe an der Antriebseinrichtung 5 angeordnet ist, so dass der Aufwand für Maßnahmen zum Gewährleisten der Kettenspannung gering ist.

Das Motorsteuergerät 75 übernimmt die Ansteuerung der elektronisch kommutierten Maschine mit Hilfe eines Kommutierungsverfahrens. Für die Kommutierung von bürstenlosen elektrischen Maschinen ist eine Kenntnis der Rotorlage des Rotors 21 notwendig. Im vorliegenden Ausführungsbeispiel kann die Ermittlung der Rotorlage sensorlos durchgeführt werden, um das Vorsehen eines internen Rotorlagesensors (häufig als Absolutwertgeber wie z.B. Resolver oder AMR-Sensor ausgebildet) und dessen Verkabelung mit dem Motorsteuergerät zu vermeiden.

Das Antriebssystem ermöglicht die Ansteuerung der elektrischen Maschine durch die sensorlose Kommutierung. Dieses Verfahren kann jedoch nur angewendet werden, wenn sich entweder die elektrische Maschine dreht oder die Maschine ohne Last anlaufen kann.

Wenn der Fahrer das Kopplungszahnrad 33 mit dem Sonnenradabtriebsritzel 27 koppelt, schleppt das Zweirad beim Anfahren die elektrische Maschine automatisch auf Drehzahl und die Elektronik des Motorsteuergeräts 75 kann nun automatisch die Rotorlage aus der Generatorspannung, d.h. den Phasenspannungen, ermitteln. Dann ist eine sensorlose Kommutierung möglich.

Der Fahrer hat weiterhin die Möglichkeit, zunächst mit ausgekoppeltem Kopplungszahnrad 33 anzufahren und erst nach dem Anfahren die elektrische Maschine einzukuppeln. Es ist auch denkbar, dass die elektrische Maschine im ausgekuppelten Zustand ohne Last z.B. im gesteuerten Betrieb durch ein mit einer vorgegebenen Frequenz umlaufendes Motormagnetfeld selbst anlaufen kann und durch einen zusätzlichen Impulsgeber, der die Geschwindigkeit der Antriebskette 73 detektiert, die Drehzahl der elektrischen Maschine an die Drehzahl des Kopplungszahnrades 33 anpasst. Auf diese Weise wird die Antriebsvorrichtung 7 so synchronisiert wird, dass das Kopplungszahnrad 33 mit dem Sonnenradabtriebsritzel 27 gekoppelt werden kann.

Das Motorsteuergerät soll die elektrische Maschine so ansteuern, dass eine Fahrunterstützung realisiert wird. Eine solche Fahrunterstützung kann z.B. mit Hilfe eines Pedaldrehmomentsensors erkannt werden, der eine Kraftübertragung auf die Pedale durch den Fahrer durch Feststellen einer Momentenerhöhung detektieren kann. Dieser muss entweder als spezielles Torsionselement mit entsprechenden elektronischen Sensorelementen beispielsweise mit einer DMS-Schaltung in den Pedalraum eingebaut und justiert werden bzw. es kommen andere zum Teil hochsensible und spezielle Messprinzipien zur Anwendung. Ein solcher Sensor ist sehr aufwendig zu implementieren und die Verkabelung mit dem Motorsteuergerät 75, in dem die Notwendigkeit der Fahrerunterstützung ermittelt wird, erhöht die Ausfallwahrscheinlichkeit des Systems insgesamt.

Durch die zwei von einander unabhängigen Kettenantriebe, die Pedalkette 63 und die Antriebskette 73, kann auf der Pedalantriebsseite nur der Fahrer die Pedalketter 63 in Bewegung versetzen. Über die Pedalkette 63 signalisiert der Fahrer somit seinen Wunsch zur Fahrerunterstützung, indem er die Pedalkette 63 in Bewegung hält (bzw. die Pedale betätigt); ansonsten befindet sich die Pedalkette aufgrund eines Freilaufs in der Hinterradnabe im Freilauf. Das Bewegen der Pedalkette 63 kann durch einen Bewegungssensor, wie z.B. einen Impulsgeber detektiert werden. Der Bewegungssensor meldet bei Detektion einer Bewegung der Pedalkette 63 den Fahrerunterstützungswunsch an das Motorsteuergerät 75. Wenn der Fahrer nicht in die Pedale tritt, wird keine Fahrunterstützung bereitgestellt. Das Motorsteuergerät 75 kann das von der elektrischen Maschine 16 bereitgestellte Drehmoment abhängig von der Geschwindigkeit der Bewegung der Pedalkette 63 einstellen.

Bei einer weiteren Ausführungsform ist vorgesehen, auf den Pedaldrehmomentsensor zur Detektion des vom Fahrer aufgebrachten Drehmoments zu verzichten und stattdessen die Mechanismen der sensorlosen Rotorlageerfassung zu nutzen, um das Pedaldrehmoment abzuleiten. In diesem Fall müssen keine empfindlichen Sensorelemente für die Erfassung des Pedaldrehmoments vorgesehen werden und es ist keine zusätzliche Justierung, keine zusätzlichen Abdichtungsmaßnahmen und keine zusätzliche Schirmung notwendig, weder elektrisch noch magnetisch.

Der Unterstützungswunsch für einen Eingriff des elektromotorischen Antriebs wird zum Beispiel durch einen Impulsgeber 9 (Fig. 1) am Spannritzel der Kettenschaltung signalisiert. Sobald der Fahrer die Pedale betätigt und das Spannritzel rotiert, werden Impulse erzeugt und abhängig von der Vorauswahl, die ein Unterstützungsmoment angibt, bis zur Leistungsgrenze der Antriebsvorrichtung ein konstanter Motorstrom eingeprägt bzw. das konstante Unterstützungsmoment bereitgestellt. Im Leerlauf bzw. im Rollbetrieb ist die Motorsteuereinheit (75) so vorgesehen, dass die Leerlaufverluste automatisch ausgeglichen werden sollen, sodass sich die Bremswirkungen durch die zusätzliche Mechanik nicht bemerkbar machen.

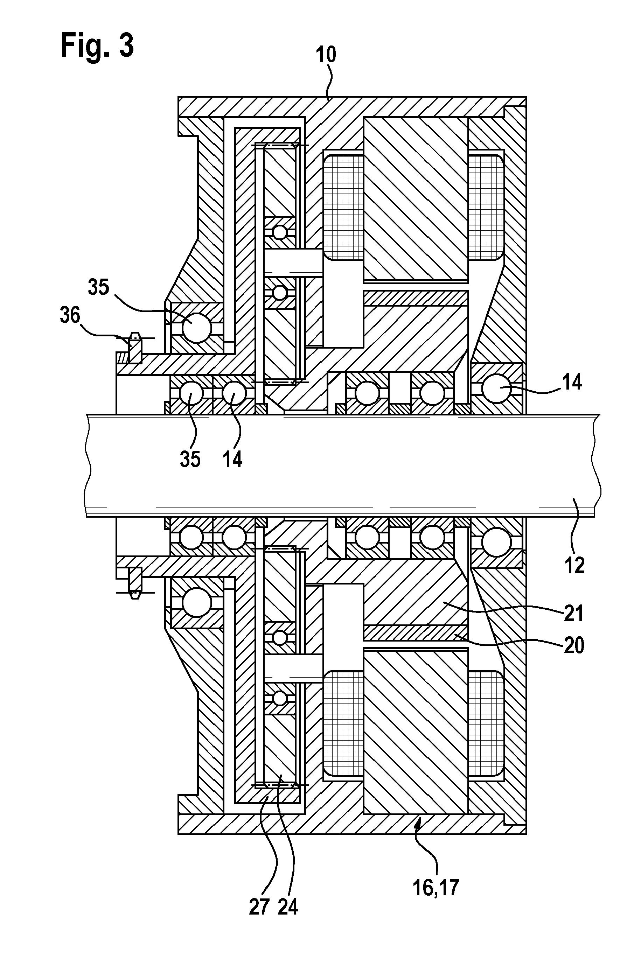

In Figur 3 ist eine schematische Darstellung einer weiteren Ausführungsform der Antriebseinrichtung 5 dargestellt. Diese Ausführungsform sieht vor, dass das Sonnenradabtriebsritzel 27 über eine entsprechende Lagerung 35 in axialer Richtung nach außen geführt wird und dort ein weiteres Abtriebsritzel 36 antreibt, das fest mit der elektrischen Maschine 16 gekoppelt ist. Auf diese Weise ist es möglich, sowohl das Abtriebsritzel 36 der elektromotorischen Antriebsvorrichtung als auch die Abtriebsritzel 61 der Pedalvorrichtung 6 koaxial zueinander vorzusehen, was die Eigenschaften einer derartigen Antriebseinrichtung 5 bezüglich eines federnd gelagerten Hinterrades noch verbessert. Der Überlastschutz und die Freischaltung der Kopplung zwischen der Antriebseinrichtung 5 und dem Hinterrad wird in diesem Fall vorzugsweise in die Hinterradnabe des Hinterrades 3 integriert.

## Patentansprüche

1. Antriebseinrichtung (5), insbesondere für ein pedalbetriebenes Fahrzeug, umfassend:
- eine Pedalantriebsvorrichtung (6) mit einer Pedalwelle (12), die eine erste Kopplungseinheit (61) zur Kopplung mit einem Antriebsrad (3) trägt, die koaxial zur Pedalwelle (12) angeordnet ist;
- eine elektromotorische Antriebsvorrichtung (71) mit einer rotatorischen elektrischen Maschine (16), deren Läufer (21) koaxial um die Pedalwelle (12) und drehbeweglich bezüglich der Pedalwelle (12) angeordnet ist, wobei der Läufer (21) der elektrischen Maschine (16) mit einer zweiten, von der ersten Kopplungseinheit (61) getrennten Kopplungseinheit (72) zur Kopplung mit dem Antriebsrad (3) gekoppelt ist, um ein von der elektrischen Maschine (16) bereitgestelltes Antriebsmoment über die zweite Kopplungseinheit (72) zu übertragen.

2. Antriebseinrichtung (5) nach Anspruch 1, wobei die erste und/oder die zweite Kopplungseinheit (61, 72) als Abtriebsritzel ausgebildet sind.

3. Antriebseinrichtung (5) nach Anspruch 2, wobei das erste Abtriebsritzel (61) koaxial zur Pedalwelle (12) ausgebildet ist.

4. Antriebseinrichtung (5) nach Anspruch 2 oder 3, wobei das zweite Abtriebsritzel (72) koaxial zur Pedalwelle (12) ausgebildet ist, insbesondere wobei das zweite Abtriebsritzel (72) axial mit einem Sonnenrad eines Planetengetriebes verbunden ist.

5. Antriebseinrichtung (5) nach einem der Ansprüche 1 bis 3, wobei die elektrische Maschine (16) mit der zweiten Kopplungseinheit (72) über ein Planetengetriebe gekoppelt ist, wobei die zweite Kopplungseinheit (72) Teil einer Abtriebseinheit ist, die die zweite Kopplungseinheit (72) über ein Kopplungsritzel mit einem Sonnenrad des Planetengetriebes koppelt.

6. Antriebseinrichtung (5) nach Anspruch 5, wobei die Abtriebseinheit bewegbar ausgebildet ist, um eine Kopplung zwischen dem Sonnenrad und dem Kopplungsritzel herzustellen oder zu lösen.

7. Antriebseinrichtung (5) nach einem der Ansprüche 1 bis 6, wobei eine Motorsteuereinheit (75) vorgesehen ist, um eine Läuferlage eines Läufers (21) der elektrischen Maschine (16) mit Hilfe eines sensorlosen Erfassungsverfahren durch Messen mindestens einer elektrischen Größe, insbesondere einer Phasenspannung und/oder eines Phasenstromes, zu detektieren und um eine Kommutierung der elektrischen Maschine (16) basierend auf der detektierten Läuferlage durchzuführen.

8. Antriebseinrichtung (5) nach einem der Ansprüche 1 bis 7, wobei ein Sensor vorgesehen ist, um eine Bewegung der Pedalwelle zu detektieren, wobei eine Motorsteuereinheit (75) vorgesehen ist, um abhängig von einer detektierten Bewegung der Pedalwelle (12) die elektrische Maschine (16) zur Fahrunterstützung anzusteuern.

9. Antriebseinrichtung (5) nach einem der Ansprüche 1 bis 8, wobei ein Sensor vorgesehen ist, um eine Bewegung der Pedalwelle (12) zu detektieren, wobei eine Motorsteuereinheit (75) vorgesehen ist, wobei die Motorsteuereinheit (75) die elektrische Maschine (16) generatorisch betreibt, wenn keine Bewegung der Pedalwelle (12) detektiert wird.

10. Antriebseinrichtung (5) nach einem der Ansprüche 1 bis 9, wobei die erste und die zweite Kopplungseinheit (61, 72) an in axialer Richtung gegenüberliegenden Seiten der elektrischen Maschine (16) angeordnet sind.

11. Pedalbetriebenes Fahrzeug (1), insbesondere ein Zweirad, umfassend:
- einen Rahmen (2);
- ein Antriebsrad (3), das an dem Rahmen (2) angeordnet ist;
- eine Antriebseinrichtung (5) nach einem der Ansprüche 1 bis 9, die an dem Rahmen (2) angeordnet ist und über eine Kraftübertragungseinrichtung (61, 62, 63) mit dem Hinterrad (3) zum Übertragen einer Antriebskraft verbunden ist.

12. Fahrzeug (1) nach Anspruch 11, wobei die erste Kopplungseinheit (61, 62) mit dem Antriebsrad (3) über eine erste Kette (63) und die zweite Kopplungseinheit mit dem Antriebsrad (3) über eine zweite Kette (73) zum Übertragen der Antriebskraft verbunden ist, wobei die erste und die zweite Kette (63, 73) auf in axialer Richtung gegenüberliegenden Seiten der Antriebseinrichtung (5) angeordnet sind.

13. Fahrzeug (1) nach Anspruch 11 oder 12, wobei das Antriebsrad (3) an einer Radgabel aufgehangen ist, wobei die Radgabel nahe der Antriebseinrichtung (5) schwenkbeweglich gelagert ist, so dass bei einem Verschwenken des Antriebsrad (3) eine Änderung des Abstands der zweiten Kopplungseinrichtung (72) und einer Radnabe des Antriebsrad (3) eine relative Änderung von 10%, vorzugsweise von 5%, nicht übersteigt.
